# EUROPÄISCHE PATENTSCHRIFT

(11) **EP 3 958 038 B1**
(45) Veröffentlichungstag und Bekanntmachung des Hinweises auf die Patenterteilung: **01.10.2025**
(21) Anmeldenummer: 20192118.6
(22) Anmeldetag: 21.08.2020
(51) Int. Cl.: G02B 27/01, B61L 23/06

(54) **VERFAHREN ZUM ÜBERWACHEN VON GLEISARBEITEN UND WARNVORRICHTUNG FÜR DIESES VERFAHREN**
METHOD FOR MONITORING WORK ON RAILWAYS AND WARNING DEVICE FOR THIS METHOD
PROCÉDÉ DE SURVEILLANCE DES TRAVAUX SUR LA VOIE ET DISPOSITIF D'AVERTISSEMENT POUR LEDIT PROCÉDÉ

(43) Veröffentlichungstag der Anmeldung: 23.02.2022
(73) Patentinhaber: Siemens Mobility GmbH, 81739 München (DE)
(72) Erfinder: Griebel, Stephan, 38302 Wolfenbüttel (DE); Kohlruss, Jacob Johannes, 38116 Braunschweig (DE)
(74) Vertreter: Siemens Patent Attorneys

(56) Entgegenhaltungen:
- DE-A1- 102008 020 700
- DE-A1- 102018 102 975
- DE-A1- 19 819 624
- KR-A- 20190 078 944

## Beschreibung

Die Erfindung betrifft ein Verfahren zum Überwachen von Gleisarbeiten, bei dem
- eine Gleisanlage, an der die Gleisarbeiten durchgeführt werden, auf durch den Zugverkehr bedingte Gefährdungen hin überwacht wird,
- sobald eine bevorstehende Gefährdung festgestellt wird, rechnergestützt ein Warnsignal an eine Warnvorrichtung weitergegeben wird, die dazu eingerichtet ist, dass ein Gleisarbeiter diese mit sich führt.

Außerdem betrifft die Erfindung eine Warnvorrichtung für Gleisarbeiten Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung des erfindungsgemäßen Verfahrens ausgestattet ist.

Eine Eisenbahninfrastruktur muss regelmäßig gewartet werden. Die zu verrichtenden Arbeiten reichen von reinen Bautätigkeiten (wie Schotterstopfen, Schienenschleifen/tauschen usw.) bis hin zu Inspektionsarbeiten der Signal- und Sicherungstechnik (wie Kalibrierung von Achszählsensoren, Austausch von elektronischen Baugruppen usw.). Diese Tätigkeiten setzen jedoch voraus, dass Maintenance- und Service-Mitarbeiter hierfür in der Gleisanlage arbeiten müssen. Dabei findet weiterhin der Zugbetrieb z.B. auf einem Nachbargleis statt. Die Arbeiten werden üblicherweise in Gruppen, sogenannten Rotten, durchgeführt. Die Arbeiten im Gleis sind sehr gefährlich. Trotz des Einsatzes von Sicherungstechnik kommt es immer wieder zu Unfällen, teils mit Todesfolge.

Bisher wird das Baustellenpersonal (Rotte) durch eine sog. Rottenwarnanlage vor dem Herannahen eines Zuges gewarnt. Das Herannahen des Zuges aktiviert z.B. durch einen Radkontakt im Gleisbett die zugehörigen Signalleuchten und akustischen Warnmelder. Das Baustellenpersonal muss sich entsprechend den in der Eisenbahn-Signalordnung festgelegten Signalen verhalten, z.B. das Gleis räumen.

Es gibt verschiedene akustische Rottenwarnsignale mit unterschiedlicher Bedeutung, z.B. langer durchgezogener Ton ("Vorsicht! Im Nachbargleis nähern sich Fahrzeuge") oder zwei lange Töne nacheinander in verschiedener Tonlage ("Arbeitsgleise räumen!") oder mindestens fünf Mal jeweils zwei kurze Töne in verschiedenen Tonhöhen kurz nacheinander ("Arbeitsgleise schnellstens räumen!"). Außerdem werden auch sogenannte Personal Devices angewendet, also am Köper getragene Warnvorrichtungen, die dazu eingerichtet ist, dass ein Gleisarbeiter diese mit sich führt.

Aus dem Dokument DE 10 2008 020 700 A1 ist eine optische Rottenwarnanlage mit einer Vielzahl optischer Warnanzeiger bekannt.

Die Aufgabe der Erfindung besteht darin, ein Verfahren und eine Vorrichtung zum Überwachen von Gleisarbeiten anzugeben, mit dem und mit der einerseits eine zuverlässige Warnung gefährdeter Gleisarbeiter erfolgen kann, und andererseits eine möglichst präzise Darstellung der drohenden Gefahr möglich ist. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird bei dem eingangs angegebenen Verfahren erfindungsgemäß dadurch gelöst, dass
- die Warnvorrichtung mit einem Head-up-Display ausgeführt ist,
- das Warnsignal aus einer von dem Head-up-Display ausgegebenen Markierung im Sichtfeld des Gleisarbeiters besteht, wobei die Markierung denjenigen Bereich der Gleisanlage kennzeichnet, für den die bevorstehende Gefährdung festgestellt worden ist.

Die Grundidee besteht darin, dem Baustellenpersonal die Möglichkeit zu geben, zusätzlich zu den akustischen Signalen der Rottenwarnanlage auch optische Hinweise zu erhalten, die direkt in seinem Blickfeld den gefährdeten Bereich markieren, um die Sicherheit des Personals zu erhöhen. Die Mitglieder des Baustellenpersonals erhalten eine Brille, in deren Sichtfeld diejenigen Gebiete, in denen eine Gefahr für Leib und Leben droht, beispielsweise farblich hinterlegt sind. Die markierten Teilbereiche der Brille führen zusammen mit der normal durch die Brille wahrgenommene Realität zu einem klaren Bild, wo Gefahr droht.

Um diesen Schutz, der auch parallel zu den bestehenden Warnanlagen umgesetzt werden kann, zu realisieren, werden beispielsweise einer Verarbeitungseinheit in der Brille die notwendigen Informationen über Belegungsinformationen der Gleise, deren Einbindung in Fahr- oder Rangierstraßen, der geographische Streckenatlas und ggf. die Zugposition mitgeteilt. Diese Daten können direkt aus einem Stellwerk (zum Beispiel RBC, d. h. Radio Block Center) per Funk oder UMTS oder WLAN kommen.

Durch diesen neuartigen Ansatz zur optischen Unterstützung des Gleisarbeiters zur Erkennung von kritischen Gleisbereichen kann die Sicherheit erheblich verbessert werden. Durch die Möglichkeit der verschiedenartigen Kommunikationsverbindung zwischen dem Speicherort der Gleisbelegungsinformation und der Verarbeitungseinheit der Brille (WLAN, Funk, UMTS, ...) ist auch der Einsatz nicht nur im Stellwerksbereich, sondern auch auf freier Strecke möglich.

Die Aufgabe wird mit anderen Worten durch die Verbindung von jungen Technologien gelöst, also
- einem Head-up-Display, zum Beispiel in Form einer Brille,
- der Erfassung der Gleisanlage als virtuelle Realität (auch Virtual Reality genannt, im Folgenden mit VR abgekürzt),
- der Erzeugung einer Augmented Reality (Augmented Reality, im Deutschen auch erweiterte Realität genannt, im Folgenden mit AR abgekürzt), erweitert um die Information einer Gefährdungslage.

Von einer Erzeugung einer AR im Sinne der Erfindung ist also zu sprechen, wenn einer vorher erzeugten VR der Gleisanlage eine Markierung überlagert wird, die ein Gefährdungspotential des betreffenden Gleisarbeiters kennzeichnet. Dabei wird das Gesichtsfeld des Gleisarbeiters (abhängig von dessen Ort und seiner Blickrichtung) berücksichtigt. Das Gesichtsfeld des Gleisarbeiters umfasst immer nur einen Ausschnitt der realen Gleisanlage, der rechnergestützt mit dem äquivalenten Ausschnitt der VR in Deckung gebracht werden kann. Auf diese Weise wird die Markierung der AR genau an die Stelle des Head-up-Display projiziert, an der die Gefahr zu kennzeichnen ist (die VR selbst muss dabei nicht dargestellt werden).

Die erfindungsgemäße Methode, ein Gefährdungspotenzial im Gesichtsfeld des Gleisarbeiters darzustellen, ermöglicht vorteilhaft eine genaue Lokalisierung der Gefahrenstelle. Dies verhindert vorteilhaft, dass ein Gleisarbeiter, der vor einem herannahenden Zug gewarnt wird, sich versehentlich in Richtung der Gefahrenstelle und nicht von dieser weg bewegt. Außerdem ist eine solche Kennzeichnung für den Gleisarbeiter leicht wahrzunehmen, da sie sich immer im Gesichtsfeld desselben befindet.

Es kann damit vorteilhaft verhindert werden, dass ein Warnsignal, welches von einer zentral an der Strecke abgestellten Warnanlage ausgeht, übersehen oder überhört wird beispielsweise, weil bei den Gleisbauarbeiten Lärm entsteht oder andere Lichtquellen vorhanden sind (beispielsweise durch Schweißen). Eine solche Warnanlage kann zusätzlich aufgestellt werden, ohne den Rahmen der Erfindung zu verlassen.

Bei der Projektierung wird die Gleisinfrastruktur und die unmittelbare Umgebung in einer Punktewolke durch Messverfahren erfasst. Jeder Punkt der Punktewolke ist dabei georeferenziert. Aus dieser Punktewolke lässt sich ein georeferenziertes 3D Model ableiten, in dem Objekte wie Schienen, Signale, Weichen, Gebäude, Vegetation usw. nun identifiziert und klassifiziert sind. Man hat somit ein digitales Abbild der Realität, die VR, in der die relevante Eisenbahninfrastruktur auch als Funktion zugeordnet werden kann.

Mit der Technik Virtual Reality (VR) kann ein Gleisarbeiter sich nun in einem solchen 3D Model mit seinem Head-up-Display bewegen. Um eine Ansicht in dem 3D Model zu ermöglichen, wird eine georeferenzierte Position und ein Vektor der Blickrichtung, von der georeferenzierten Position ausgehend, ermittelt.

Ein solches 3D Model lässt sich dadurch auf die Realität der Gleisanlage anwenden. Das Head-up-Display muss dabei eine georeferenzierte Position liefern und den Vektor der Blickrichtung (ermittelt z.B. über Gyroskop-Sensoren und Bilderkennung). Nun kann die Sicht aus dem 3D Model mit der realen Sicht digital überlagert werden und Informationen (z.B. Objekte aus dem 3D Model auf dem Head-up-Display) angezeigt werden. Diese Objekte werden nun für den Träger der Brille optisch so dargestellt, als ob das digitale Objekt in der Realität existieren würde. So entsteht die AR.

In einer signaltechnischen Anlage zum Leiten und Sichern von Zügen sind auch Zustände von Objekten bekannt, die eine Funktion ausführen. Z.B. die Beanspruchung eines Gleises, weil es bereits Teil einer Fahrstraße ist. Eine bereits gestellte Fahrstraße hat üblicherweise zur Folge, dass ein Zug zeitnah diese Fahrstraße befahren wird. Zeigt man die Information (als AR-Information) der Fahrstraßenbeanspruchung der Person im Gleis an, ist diese Person nicht nur akustisch aus der Ferne gewarnt, sondern auch visuell, und zwar selektiv für den Bereich, für den die Gefahr besteht.

Unter "rechnergestützt" oder "computerimplementiert" kann im Zusammenhang mit der Erfindung eine Implementierung des Verfahrens verstanden werden, bei dem mindesten ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise einen Wandler einen Sensor zur Erzeugung von Messsignalen oder eine elektronische Schaltung, verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Programmmodule" sollen einzelne Funktionseinheiten verstanden werden, die den erfindungsgemäßen Programmablauf ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Gemäß einer Ausgestaltung der Erfindung ist vorgesehen, dass die bevorstehende Gefährdung aus einer Belegungsinformation eines Gleisabschnitts der Gleisanlage, an dem die Gleisarbeiten durchgeführt werden, und/oder eines dem letztgenannten Gleisabschnitt benachbarten Gleisabschnittes abgeleitet werden.

Vorteilhaft ist es möglich, Daten aus dem automatisierten Zugbetrieb zu verwenden, um eine Belegungsinformation von Gleisabschnitten zu erhalten. Diese Methode ist vorteilhaft sehr zuverlässig, da die Belegungsinformationen von Gleisen mit den höchsten Sicherheitsstandards ermittelt werden, um Kollisionen zwischen Zügen zu vermeiden. Somit sind diese Informationen selbstverständlich auch geeignet, um eine Versorgung der Warnvorrichtung mit Informationen zu gewährleisten.

Die bevorstehende Gefährdung aus einer Belegungsinformation des Gleisabschnittes zu erhalten, an dem die Gleisarbeiten durchgeführt werden, ist zur Terminierung einer ersten Warnung nur bei langen Gleisabschnitten geeignet, da der Zug dann sonst schon vergleichsweise nah an die Baustelle herangefahren sein kann. Daher ist es vorteilhaft, bereits den benachbarten Gleisabschnitt zu verwenden, da das Herannahen eines Zuges dann bereits festgestellt werden kann, wenn der betreffende Abschnitt noch nicht befahren wird. In diesem Fall kann der Gleisabschnitt, in dem die Bauarbeiten stattfinden, für eine höher priorisierte Warnung verwendet werden, wenn die Gleisarbeiter die Baustelle noch nicht geräumt haben sollten (hierzu im Folgenden noch mehr) .

Gemäß einer Ausgestaltung der Erfindung ist vorgesehen, dass die bevorstehende Gefährdung auf Grund einer Ermittlung der tatsächlichen Position von Schienenfahrzeugen, die sich den Gleisarbeiten nähern, festgestellt wird.

Diese Ausgestaltung der Erfindung hat den Vorteil, dass die Position der herannahenden Züge (der Begriff Zug und Schienenfahrzeug sollen im Rahmen dieser Erfindung synonym verstanden werden) vergleichsweise genau zu jedem Zeitpunkt bestimmt werden kann. Hierbei kann beispielsweise eine GPS-Ortung oder ein automatisches Zugleitsystem mit einer Moving Block Technologie (ein mit dem Zug sich bewegender freigegebener Streckenabschnitt) verwendet werden. Damit ist eine genauere Voraussage für das Eintreffen des Zuges an der Baustelle möglich.

Hierbei kann vorteilhaft auch die Geschwindigkeit des herannahenden Zuges bestimmt werden. Aus der Geschwindigkeit lässt sich einerseits der Zeitpunkt des Eintreffens des Zuges bei der Gleisbaustelle ermitteln. Außerdem ist die Geschwindigkeit des Zuges bei der Bewertung des Gefährdungspotenzials mit zu berücksichtigen. Je schneller ein Zug die Baustelle passiert, desto größer muss der Sicherheitsabstand sein, den die Gleisarbeiter von dem betreffenden Gleis während der Zugdurchfahrt haben.

Gemäß einer Ausgestaltung der Erfindung ist vorgesehen, dass die Markierung aus einer farblich bedingten und/oder helligkeitsbedingten Hervorhebung besteht, die den Bereich der Gleisanlage überlagert, für den die bevorstehende Gefährdung festgestellt worden ist.

Eine solche Hervorhebung ist für den Gleisarbeiter vorteilhaft intuitiv begreifbar und außerdem schwer zu übersehen. Daher kann mit einer solchen Hervorhebung ein Warnsignal erzeugt werden, welches die Wahrscheinlichkeit, übersehen zu werden, vorteilhaft minimiert. Die Markierung kann im Übrigen so ausgeführt sein, dass sie in der AR zumindest teiltransparent erscheint und somit die Realität der Gleisanlage trotz der Hervorhebung durch das Head-up-Display noch zu erkennen ist.

Gemäß einer Ausgestaltung der Erfindung ist vorgesehen, dass die Hervorhebung einen Bodenbereich der Gleisanlage kennzeichnet.

Hierbei handelt es sich um eine zweidimensionale Kennzeichnung. Diese hat den Vorteil, dass das reale Abbild der Gleisanlage im Head-up-Display noch gut zu erkennen ist und daher den Gleisarbeiter bei der Orientierung während der Sicht durch die Brille nicht behindert.

Gemäß einer Ausgestaltung der Erfindung ist vorgesehen, dass die Hervorhebung ein Volumen innerhalb der Gleisanlage kennzeichnet.

Ein Volumen als Hervorhebung hat den Vorteil, dass dieses bei der Sicht durch das Head-up-Display besser auffällt. Außerdem wird eine intuitive Reaktion des Gleisarbeiters unterstützt, der sich von solcher Hervorhebung wegbewegen würde.

Gemäß einer Ausgestaltung der Erfindung ist vorgesehen, dass die Hervorhebung abgestuft in Abhängigkeit von einer Gefährdungshöhe darstellbar ist.

Eine Abstufung der Hervorhebung kann beispielsweise farblich oder durch Helligkeit oder durch eine Kombination beider Mittel erzeugt werden. Auch hierbei kann vorteilhaft intuitiv vorgegangen werden. Beispielsweise ist es möglich, eine Färbung der Hervorhebung von gelb über orange nach tiefrot zu verändern, um die Steigerung des Gefährdungspotenzials darzustellen. Rot ist eine Farbe, die durch den Menschen tendenziell mit Gefahr in Zusammenhang gebracht wird.

Eine andere Möglichkeit besteht darin, dass die Lichtintensität des Warnsignals in Form der Hervorhebung erhöht werden kann. Dies bewirkt auch, dass der Bereich, der verlassen werden soll, immer schwerer zu erkennen ist. Dies bewirkt ebenfalls intuitiv die Reaktion eines Gleisarbeiters, sich von diesem Bereich weg zu bewegen.

Gemäß einer Ausgestaltung der Erfindung ist vorgesehen, dass das Warnsignal zusätzlich einen Warnhinweis beinhaltet, der insbesondere in das Head-up-Display eingeblendet wird.

Unter einem Warnhinweis im Sinne der Erfindung ist ein Hinweis zu verstehen, der nicht durch eine Hervorhebung eines Teils der VR entsteht, sondern in der AR einen zusätzlichen Hinweis erzeugt. Dieser kann vorzugsweise eingeblendet werden. Er kann aus einem Symbol, zum Beispiel einem Gefahrensymbol, bestehen oder auch einen Text umfassen, zum Beispiel aus einer Aufforderung bestehen, den Gefahrenbereich zu räumen.

Auch ist es möglich, den Warnhinweis nicht unter Zuhilfenahme des Head-up-Displays, sondern durch eine andere Einrichtung zu erzeugen. Hier sei als Beispiel eine für die Gruppe von Gleisarbeitern (Rotte) zu verwendende Warnanlage genannt, die am Rande der Baustelle aufgestellt werden kann und einen akustischen und/oder optischen Warnhinweis ausgeben kann. Eine andere Möglichkeit besteht darin, einen Schallerzeuger in die Warnvorrichtung zu integrieren, die auch das Head-up-Display aufweist.

Gemäß einer Ausgestaltung der Erfindung ist vorgesehen, dass der Warnhinweis ausgegeben wird, wenn eine Reaktion des Gleisarbeiters auf das ursprüngliche Warnsignal ohne Warnhinweis nicht registriert werden kann.

Hierdurch wird vorteilhaft ausgeschlossen, dass Warnhinweise nicht mehr ernst genommen werden, weil diese zu oft ohne triftigen Grund ausgegeben werden. Die Ermittlung beispielsweise der Position des Gleisarbeiters und somit eine Auswertung im Hinblick auf eine Reaktion des Gleisarbeiters, auf ein Warnsignal hin die Baustelle zu verlassen, führt dann im Fall steigender Gefährdung zur Ausgabe des Warnhinweises.

Vorteilhaft kann dieser auch individuell nur an jene Gleisarbeiter ausgegeben werden, die sich noch in Gefahr befinden. Alternativ kann der Warnhinweis auch an Gleisarbeiter ausgegeben werden, die sich nicht mehr im Gefahrenbereich befinden, um diese zu animieren, gefährdete Kollegen auf die Gefahr aufmerksam zu machen. Hierfür kann vorteilhaft auch ein Warnhinweis erfolgen, der auf die Notwendigkeit hinweist, gefährdete Gleisarbeiter auf die Gefahr aufmerksam zu machen. Auch dies lässt sich durch ein geeignetes Symbol oder eine eingeblendete Textnachricht bewerkstelligen.

Gemäß einer Ausgestaltung der Erfindung ist vorgesehen, dass über das Head-up-Display ein Leitsignal ausgegeben wird, das aus einer weiteren Markierung für einen gefahrlosen Arbeitsbereich für den Gleisarbeiter besteht.

Damit kann ein Leitsignal vorteilhaft eine Leitfunktion übernehmen, damit die Gleisarbeiter zuverlässig aus dem Gefahrenbereich herausfinden. Dieses Leitsignal kann, ähnlich wie zu den Warnsignalen beschrieben, sowohl eine dreidimensionale Markierung als auch eine zweidimensionale Markierung in der AR darstellen. Das Leitsignal kann wie der Warnhinweis ein Symbol oder eine Textnachricht umfassen, zum Beispiel auch eine Richtung vorgeben, in die sich die Gleisarbeiter bewegen sollen. Auf jeden Fall ist es vorteilhaft, das intuitive Verständnis der Gleisarbeiter bei der Gestaltung des Leitsignals zu berücksichtigen. Beispielsweise kann ein Pfeil die Richtung aufzeigen, in die sich der Gleisarbeiter bewegen soll. Möglich ist es auch, eine Fläche oder ein Volumen beispielsweise grün zu färben, da diese Farbe durch den Menschen tendenziell so interpretiert wird, sich einem solchen Bereich zu nähern.

Gemäß einer Ausgestaltung der Erfindung ist vorgesehen, dass für einen Datenaustausch mit dem Head-up-Display eine Steuereinheit verwendet wird, die über eine insbesondere kabellose Schnittstelle mit dem Head-up-Display kommuniziert.

Vorteilhaft kann die Steuereinrichtung optimal auf eine Kommunikation mit dem Head-up-Display der Warnvorrichtung ausgelegt sein. Hierbei können beispielsweise notwendiger Sende- und Empfangsradius, Übertragungsprotokolle usw. berücksichtigt werden. Außerdem ist es hierdurch möglich, eine Steuereinrichtung zur Verfügung zu stellen, die sich in bereits bestehende Anlagen der Zugsicherung integrieren lässt. Hierbei müssen lediglich die Schnittstellen festgelegt werden, sodass eine Übertragung von Daten, die die Steuereinrichtung für die Bewältigung der Aufgaben eines Monitorings der Gleisbaustelle benötigt, übertragen werden.

Gemäß einer Ausgestaltung der Erfindung ist vorgesehen, dass das Head-up-Display für einen Datenaustausch mit Geräten in einer Cloud kommuniziert. Vorteilhaft wird so die Möglichkeit geschaffen, mit geringem Aufwand eine Integration einer Warnvorrichtung für Gleisarbeiter in ein bereits bestehendes cloud-basiertes Zug Automatisierungssystems zu bewerkstelligen.

Als "Cloud" soll eine Umgebung für ein "Cloud-Computing" (deutsch Rechnerwolke oder Datenwolke) verstanden werden. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf dem die Cloud nutzenden lokalen Computer installiert sein müssen. Die im Rahmen des Cloud-Computings angebotenen Dienstleistungen umfassen das gesamte Spektrum der Informationstechnik und beinhaltet unter anderem Infrastruktur, Plattformen und Software.

Die genannte Aufgabe wird alternativ mit einer Warnvorrichtung, welche durch die Merkmale des vorliegenden Anspruchs 13 definiert ist, gelöst

Mit der Warnvorrichtung lassen sich die Vorteile erreichen, die im Zusammenhang mit dem obenstehend näher beschriebenen Verfahren bereits erläutert wurden. Das zum erfindungsgemäßen Verfahren aufgeführte gilt entsprechend auch für die erfindungsgemäße Warnvorrichtung.

Des Weiteren wird ein Computerprogrammprodukt mit den Merkmalen des vorliegenden Anspruchs 14 beansprucht.

Darüber hinaus wird eine Bereitstellungsvorrichtung mit den Merkmalen des vorliegenden Anspruchs 15 beansprucht.

Bereitstellungsvorrichtung ist beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Es zeigen:

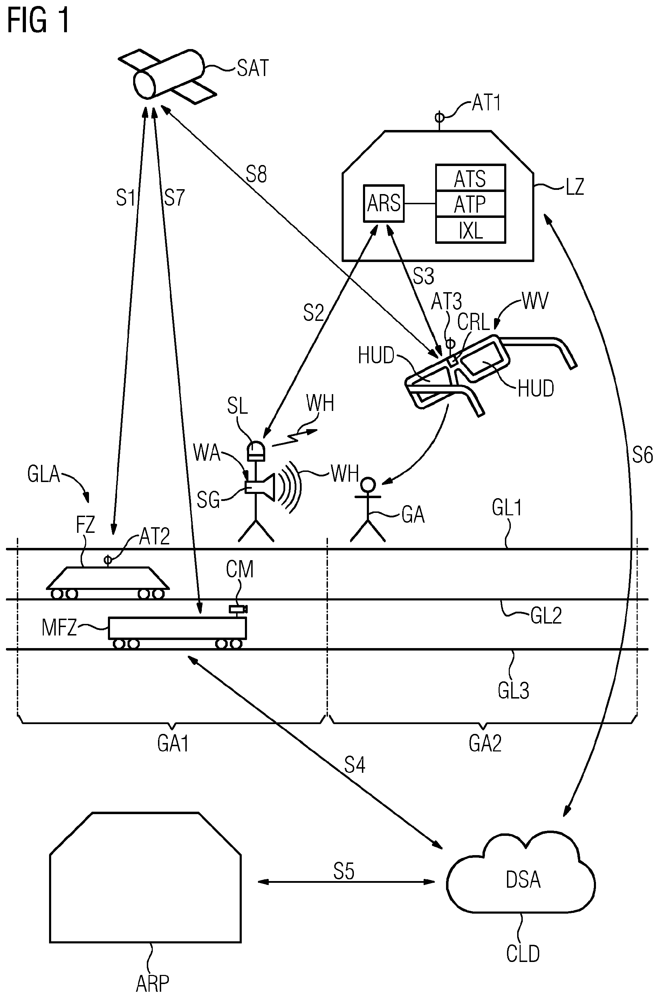

Figur 1 ein Ausführungsbeispiel der erfindungsgemäßen Warnvorrichtung mit ihren Wirkzusammenhängen schematisch,

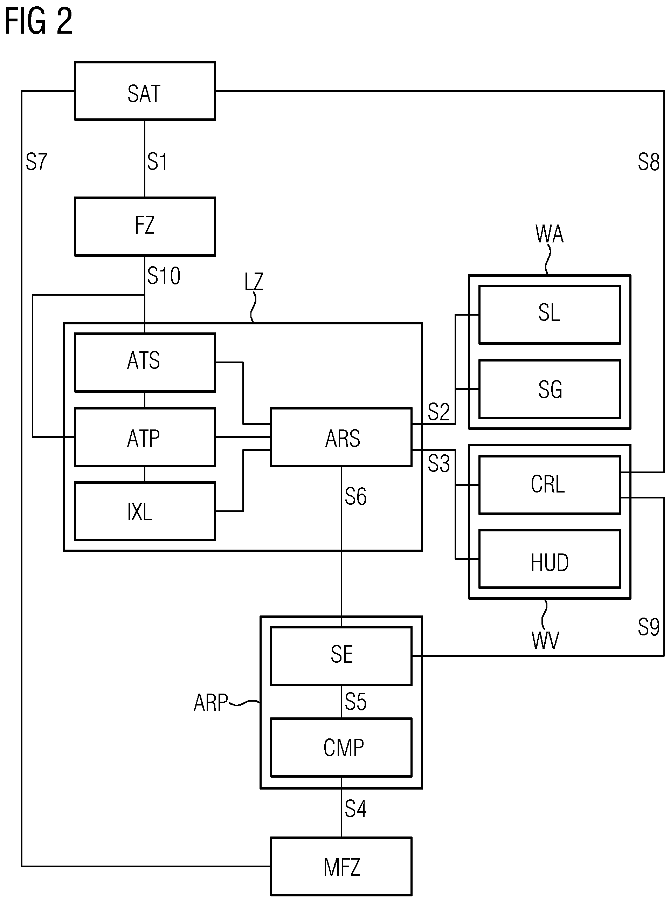

Figur 2 ein Ausführungsbeispiel der Computer-Infrastruktur der Warnvorrichtung gemäß Figur 1 als Blockschaltbild, wobei die einzelnen Funktionseinheiten als Programmmodule jeweils in einem oder mehreren Prozessoren ablaufen können und die Schnittstellen demgemäß softwaretechnisch oder hardwaretechnisch ausgeführt sein können,

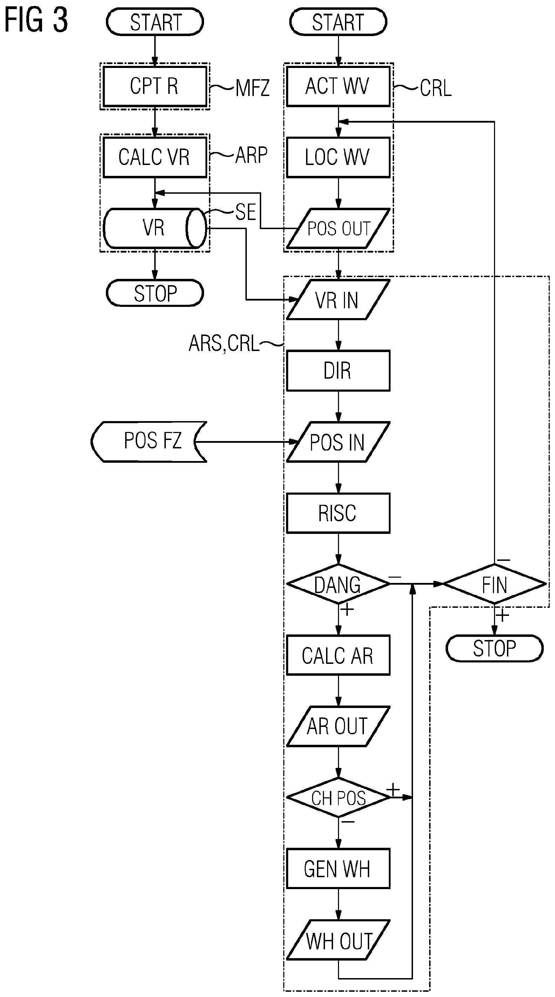

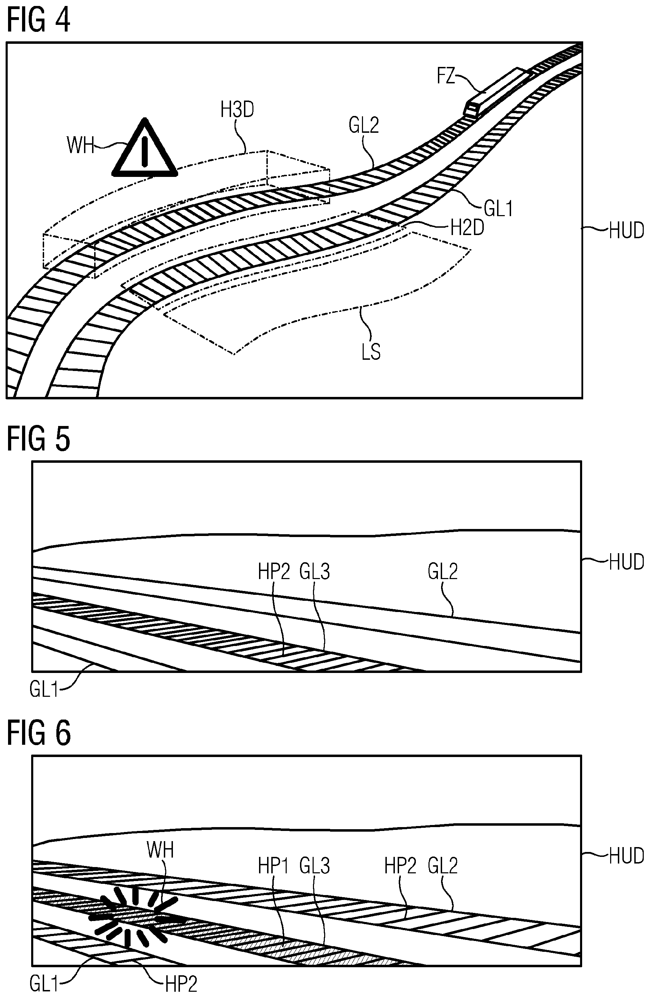

Figur 3 ein Ausführungsbeispiel des erfindungsgemäßen Verfahrens als Flussdiagramm, wobei die Funktionseinheiten und Schnittstellen gemäß Figur 2 beispielhaft angedeutet sind, die Figuren 4 bis 6 ein Ausführungsbeispiel von Head-up-Displays, wie sie in der erfindungsgemäßen Warnvorrichtung zum Einsatz kommen können.

In Fig. 1 ist ein Rottenwarnsystem an einer Gleisanlage GLA dargestellt. Eine Rotte gemäß Fig. 1 besteht aus Gleisarbeitern GA, von denen einer exemplarisch dargestellt ist, die an einem Gleisabschnitt GA2 eines Gleises GL1 Bauarbeiten verrichten (nicht näher dargestellt). Die Gleisabschnitte GA1, GA2 können während der Bauarbeiten jedoch von Fahrzeugen FZ befahren werden. Daher sind eine Warnvorrichtung WV und eine Warnanlage WA installiert, welche die Gleisarbeiter GA im Gefahrfall warnen. Während es sich bei der dargestellten Warnvorrichtung um einen persönlichen Ausrüstungsgegenstand des Gleisarbeiter GA in Form einer Brille handelt, ist die Warnanlage WA am Rande des Gleises GL1 aufgestellt und dient einer unterstützenden Warnung der gesamten Rotte.

Die Warnanlage WA gibt in an sich bekannter Weise Warnhinweise WH an die Gleisarbeiter GA ab. Der akustische Warnhinweis WH wird von einem Schallgeber SG erzeugt, der die Gleisarbeiter GA akustisch warnt. Eine Signalleuchte SL warnt die Gleisarbeiter GA mit einem optischen Warnhinweis WH. Die Warnanlage WA steht mit einer Steuereinheit ARS in einer Leitzentrale LZ über eine zweite Schnittstelle S2 in Verbindung. Die Kommunikationsverbindung zwischen der Warnanlage WA und der Steuereinheit ARS wird über eine erste Antenne AT1 an der Leitzentrale LZ sichergestellt. Die Steuereinheit ARS in der Leitzentrale LZ ist ferner mit einer automatischen Betriebsführung ATP, einem automatischen Zugsicherungssystem ATS und einem Stellwerk IXL verbunden.

Zur Erhöhung der Sicherheit - in Kombination mit der Warnanlage WA - und zur präziseren Darstellung der Gefahr durch das herannahende Fahrzeug FZ auf einem Gleis GL2 (alternativ einem Gleis GL3) trägt der Gleisarbeiter GA eine Warnvorrichtung WV in Form einer Brille direkt am Körper. Diese Warnvorrichtung WV enthält ein Head-up-Display HUD, in welchem diejenigen Gebiete, in denen eine Gefahr für Leib und Leben droht, beispielsweise farblich hinterlegt sind (vgl. Fig. 3 bis 6).

Die Warnvorrichtung WV ist ferner mit einem Controller CRL ausgestattet, in dem die notwendigen Informationen über Belegungsinformationen der Gleise GL1 ... GL3, Einbindung in Fahr- oder Rangierstraßen, der geographische Streckenatlas (vorzugsweise als VR der Gleisanlage, hierzu im Folgenden noch mehr) und ggf. die Zugposition verarbeitet werden. Zur Übertragung der notwendigen Informationen ist der Controller CRL mit einer dritten Antenne AT3 ausgestattet. Über eine dritte Schnittstelle S3 besteht eine Kommunikationsverbindung zur Steuereinheit ARS in der Leitzentrale LZ. Hierdurch wird seitens der Warnvorrichtung auf Daten aus dem automatisierten Zugbetrieb zugegriffen, um eine Belegungsinformation von Gleisabschnitten GA1, GA2 zu erhalten.

Zudem steht die Warnvorrichtung WV mit einem GPS-Satelliten SAT über eine achte Schnittstelle S8 in Verbindung. Diese Kommunikationsverbindung ermöglicht es, eine Ortung der Warnvorrichtung vorzunehmen, damit der darzustellende Ausschnitt der VR bzw. der aus dieser erzeugten AR ausgewählt werden kann. Um die Genauigkeit der Ortung zu erhöhen, können in nicht dargestellter Weise weitere Sensoren, beispielsweise Beschleunigungssensoren und/oder Lagesensoren vorgesehen werden, die auch zur Ermittlung der Blickrichtung dienen können. Zu diesem Zweck besteht auch eine Kommunikationsverbindung über eine erste Schnittstelle S1 zur Bestimmung der Position des Fahrzeugs FZ zwischen dem GPS-Satelliten SAT und dem Fahrzeug FZ, das mit einer zweiten Antenne AT2 ausgestattet ist.

Über eine Schnittstelle S7 besteht ferner eine Kommunikationsverbindung mit einem Messfahrzeug MFZ, das sich auf dem Gleisabschnitt GA1 befindet und mit einer Kamera CM ausgestattet ist. Das Messfahrzeug führt Messfahrten aus, die über eine vierte Schnittstelle in eine Cloud CLD übergeben werden. Die Messdaten werden durch einen Dienstleister, dem Augmented Reality Provider ARP zunächst in eine VR in Form einer dreidimensionalen Punktewolke umgewandelt und als digitaler Streckenatlas DSA in der Cloud CLD zur Verfügung gestellt. Der Dienstleister ARP nutzt die fünfte Schnittstelle S5 dazu.

Anschließend ruft die Leitzentrale LZ bei Bedarf über eine sechste Schnittstelle S6 Daten aus dem digitalen Streckenatlas DSA ab.

In Fig. 2 ist das Zusammenspiel der einzelnen Funktionseinheiten der Warnvorrichtung WV näher dargestellt.

Über die erste Schnittstelle S1 erfolgt seitens des GPS-Satelliten SAT eine Übertragung der Fahrzeugposition an das Fahrzeug FZ. Von dem Fahrzeug FZ wird über eine zehnte Schnittstelle S10 die Übertragung der Fahrzeugposition an das automatische Zugsicherungssystem ATP sowie der automatischen Betriebsführung ATS der Leitzentrale LZ gewährleistet. Zum Abruf der Stellwerksdaten und Zugdaten besteht ferner eine Kommunikationsverbindung zwischen einem Stellwerk IXL sowie dem Zugsicherungssystem ATP und der automatischen Betriebsführung ATS jeweils mit der Steuereinheit ARS.

Von der Steuereinheit ARS werden die Fahrzeugdaten über die sechste Schnittstelle S6 von einer Speichereinheit SE des Augmented Reality Providers ARP abgerufen. Hierbei handelt es sich um die erforderlichen Daten der VR und gegebenenfalls Daten zur Erzeugung der AR. Die Daten zur Erzeugung der AR, beispielsweise Symbolbibliotheken, können aber auch in der Steuerung ARS abgespeichert sein, so dass ein Abruf ohne Nutzung der sechsten Schnittstelle S6 möglich ist.

Die Signalleuchte SL sowie der Schallgeber SG sind über die zweite Schnittstelle S2 mit der Steuereinheit ARS verbunden, wodurch eine Übermittlung der Steuerdaten von der Steuerung ARS an die Warnanlage WA erfolgt. Analog gilt dieser Vorgang für die Warnvorrichtung WV, d. h. über die dritte Schnittstelle S3 ist die Steuereinheit ARS der Leitzentrale LZ mit dem Controller CRL und dem Head-up-Display HUD der Warnvorrichtung WV verbunden, wodurch eine Übermittlung von für die den Betrieb in der Gleisbaustelle erforderlichen Daten erfolgt. Zudem besteht zwischen dem Controller CRL über die achte Schnittstelle S8 eine Kommunikationsverbindung mit dem GPS-Satelliten SAT für die Ermittlung der Position der Warnvorrichtung WV, die direkt auf die Position des Gleisarbeiters schließen lässt.

Die in dem Controller CRL zusätzlich benötigten Daten zur Darstellung der AR werden über die neunte Schnittstelle S9 von der Speichereinheit SE des Augmented Reality Providers ARP übertragen. Somit können Daten zur Erstellung der AR oder zur Darstellung der VR also über die Steuerung ARS (vor) verarbeitet werden, wobei der Controller CRL dann in erster Linie zur Steuerung des Head-up-Displays HUD genutzt wird. Allerdings kann der Controller auch selbst eine Verarbeitungsintelligenz aufweisen, sodass die Erstellung des Bildes der AR bzw. die Darstellung der VR zumindest teilweise auch durch den Controller CRL bewerkstelligt wird. Dort liegen, wie bereits erwähnt, auch die Positionsdaten des GPS-Satelliten SAT vor und auch die weiteren Sensordaten, mit deren Hilfe die Blickrichtung des Gleisarbeiters, also die Ausrichtung des Head-up-Displays HUD ermittelt wird, werden durch den Controller CRL verarbeitet (hierzu im Folgenden noch mehr).

Um eine VR zu erzeugen, werden durch das Messfahrzeug MFZ in einem Erfassungsschritt CPT R der realen Gleisanlage die Messdaten über die vierte Schnittstelle S4 an den Computer CMP des Dienstleisters ARP übergegeben (Figur 2 in Verbindung mit Figur 3). Eine Verarbeitung der Messdaten dahingehend, dass aus diesen eine virtuelle Realität VR, beispielsweise in Form einer Punktewolke, erzeugt wird, ist an sich bekannt, und erfolgt in einem Berechnungsschritt CALC VR. Die Daten der virtuellen Realität werden dann in der Speichereinheit SE abgelegt (diese kann, wie in Figur 1 dargestellt, durch einen Cloud-Service CLD zur Verfügung gestellt werden oder durch den Dienstleister ARP beispielsweise als Server betrieben werden.

Das Verfahren zur Erstellung einer virtuellen Realität VR gemäß Figur 3 ist bereits vorstehend in Verbindung mit Figur 2 erläutert worden. Weiterhin ist in Figur 3 der Verfahrensablauf dargestellt, wie die virtuelle Realität genutzt wird, um in der Warnvorrichtung WV das Head-up-Display HUD für eine Warnung der Gleisarbeiter zu nutzen.

Wird das Verfahren gestartet, wird zunächst ein Aktivierungsschritt ATC WV der Warnvorrichtung WV durchgeführt. Sobald diese aktiviert wurde, ist zunächst ein Lokalisierungsschritt LOC WV für die Warnvorrichtung WV erforderlich. Wie bereits erwähnt, kann dies beispielsweise durch eine Ortung mindestens eines GPS-Satelliten SAT erfolgen. Auf diese Weise wird eine Position der Warnvorrichtung WV erzeugt, wobei diese bestimmungsgemäß am Körper des Gleisarbeiters getragen wird und daher einen direkten Rückschluss auf die Position des Gleisarbeiters zulässt.

In einem Ausgabeschritt POS OUT wird die Position an den Dienstleister ARP ausgegeben, wobei die in der Speichereinrichtung SE gespeicherte VR zur Verfügung steht. Der in Figur 3 nicht dargestellte Computer CMP wählt aus der VR einen Ausschnitt aus, der für die Darstellung der Gleisanlage GLA für den Gleisarbeiter GA erforderlich ist. Dieser Ausschnitt wird in einem Eingabeschritt VR IN in die Steuerung ARS oder in den Controller CRL in die Warnvorrichtung WV übertragen. Wie bereits erläutert, kann die Aufgabenteilung zwischen der Steuerung ARS und dem Controller CRL, die über die dritte Schnittstelle S3 miteinander verbunden sind, unterschiedlich ausgestaltet werden. Wichtig ist dabei lediglich, dass beide Prozessoren die für den Ablauf des Verfahrens erforderlichen Verfahrensschritte gemeinsam durchführen können.

Nach der Eingabe der VR IN der virtuellen Realität VR folgt ein Erfassungsschritt DIR der Blickrichtung des Gleisarbeiters, mit anderen Worten des Blickfeldes, welches in dem Head-up-Display in Deckung mit der realen Gleisanlage gebracht werden muss. Somit kann die VR nun in dem Head-up-Display HUD dargestellt werden, ohne dass die Darstellung die optische Wahrnehmung des Gleisarbeiters beeinträchtigt.

In einem nächsten Schritt wird die Position POS FZ des herannahenden Fahrzeugs FZ automatisch in nicht näher dargestellter Weise durch die Leitzentrale LZ ausgegeben, sodass durch einen Eingabeschritt POS IN die Position in der Steuerung ARS oder im Controller CRL berücksichtigt werden kann. Es folgt ein Bewertungsschritt RISC der Gefährdungslage des Gleisarbeiters, wobei das Gefährdungspotenzial beispielsweise anhand von Erfahrungswerten und Bibliotheken bewertet werden kann.

In einem nachfolgenden Abfrageschritt DANG wird abgefragt, ob eine ernstzunehmende Gefährdung des Gleisarbeiters vorliegt. Im negativen Falle (also keine Gefährdung) wird weiterhin in einem Abfrageschritt FIN abgefragt, ob die Gleisarbeiten zwischenzeitlich beendet wurden. Ist dies der Fall, wird das Verfahren gestoppt. Sollten die Gleisarbeiten fortdauern, wird rekursiv der Lokalisierungsschritt LOC WV für die Warnvorrichtung und alle nachfolgenden Schritte wiederholt, um eine engmaschige Überwachung des Gleisarbeiters GA sicherzustellen.

Wird eine Gefahr in dem Abfrageschritt DANG festgestellt, so folgt ein Berechnungsschritt CALC AR für eine AR, welche Informationen zur Gefährdungslage der bereits in dem Head-up-Display HUD dargestellten VR überlagert. In einem Ausgabeschritt AR OUT wird die AR ausgegeben, d. h. im Head-up-Display HUD dargestellt. Anschließend wird in einem Abfrageschritt CH POS überprüft, ob ein Positionswechsel der Warnvorrichtung stattfindet, woraus geschlossen werden kann, dass der Gleisarbeiter den Warnhinweis wahrgenommen hat und eine individuelle Konsequenz daraus ableitet. Ist ein Positionswechsel zu verzeichnen, wird rekursiv, wie bereits erläutert, ein nächster Lokalisierungsschritt LOC WV für die Warnvorrichtung WV durchgeführt. Ist eine Reaktion, d. h. ein Positionswechsel des Gleisarbeiters nicht zu registrieren, wird in einem Erzeugungsschritt GEN WH ein Warnhinweis erzeugt und dieser in einem Ausgabeschritt WH OUT ausgegeben. Dies ist zur Figur 1 bereits erläutert worden und soll an dieser Stelle nicht weiter ausgeführt werden. Nach Ausgabe des Warnhinweises werden rekursiv, wie bereits erläutert, der Lokalisierungsschritt LOC WV und die folgenden Schritte wiederholt.

In Figur 4 ist beispielhaft dargestellt, wie die Informationen in einem Head-up-Display HUD dargestellt werden können. Zu sehen sind die Gleise GL1, GL2 und ein sich näherndes Fahrzeug FZ. Es kann davon ausgegangen werden, dass das Fahrzeug FZ, wie in Figur 1 dargestellt, sich noch im ersten Gleisabschnitt GLA1 befindet und den zweiten Gleisabschnitt GLA2 demnächst befahren wird (die Gleisabschnitte GLA1, GLA2 sind in Figur 4 der Übersichtlichkeit halber nicht dargestellt).

Der Gleisarbeiter bekommt nun oberhalb des Gleises GL2 eine dreidimensionale Hervorhebung H3D eines Volumens gezeigt, welches denjenigen Bereich anzeigt, in dem der Gleisarbeiter aufgrund einer Vorbeifahrt des Fahrzeuges FZ stark gefährdet würde. Dieses Volumen H3D ist größer als die Querschnittsfläche des Fahrzeugs FZ, weil beispielsweise durch die Sogwirkung schnellfahrender Züge auch ohne Berührung des Fahrzeugs eine ernstzunehmende Gefährdung besteht.

Weiterhin dargestellt ist in Figur 4 eine Hervorhebung einer Bodenfläche H2D, die auf dem ersten Gleis GL1 liegt. Auf diese Weise lässt sich übersichtlich darstellen, dass auch der Aufenthalt auf dem Nachbargleis mit Gefahren verbunden ist, da der Abstand für einen sicheren Aufenthalt des Gleisarbeiters nicht groß genug wäre. Weiterhin ist neben dem ersten Gleis GL1 ein Leitsignal LS zu erkennen, welches ebenfalls aus einer zweidimensionalen Bodenfläche besteht. Dieses soll den Gleisarbeiter dazu veranlassen, sich zu seinem eigenen Schutz in diesen Bereich zu begeben. Im Unterschied zu dem Volumen H3D und der Bodenfläche H2D kann das Leitsignal z. B. in grün dargestellt werden, um die Empfehlung zu verdeutlichen. Das Volumen H3D größter Gefährdung kann beispielsweise rot und die Bodenfläche H2D gelb dargestellt sein.

Sollte eine Reaktion des Gleisarbeiters aufgrund der dargestellten Gefährdungslage nicht erfolgen, kann zusätzlich ein Warnhinweis WH eingeblendet werden. Dieser besteht gemäß Figur 4 aus einem Symbol, nämlich einem Verkehrsschild, welches den Signalinhalt "Achtung" symboliesiert.

In Figur 5 ist ein anderes Ausführungsbeispiel für ein Head-up-Display HUD dargestellt. In Figur 6 ist das Head-up-Display gemäß Figur 5 zu einem späteren Zeitpunkt dargestellt. Die Figuren 5 und 6 dienen daher einer Verdeutlichung, wie sich der dargestellte Inhalt im Head-up-Display HUD in Abhängigkeit einer sich geänderten Gefährdungslage angepasst werden kann.

In Figur 5 ist das dort dargestellte dritte GL3 mit einer Hervorhebung HP2 einer Priorität 2 gekennzeichnet. Dies ist gemäß Figur 5 eine einfache Schraffur, könnte aber beispielsweise auch eine Farbe, z. B. dunkelgelb oder orange, oder eine Helligkeitsabstufung sein.

In Figur 6 ist dargestellt, wie sich bei einer weiteren Annäherung des nicht dargestellten Zuges die Gefährdungslage in der Gleisanlage ändert. Das dritte Gleis GL3 ist nun mit einer kreuzschraffierten Bodenfläche und damit einer Hervorhebung HP1 der Priorität 1 hervorgehoben, um zu signalisieren, dass der Gefahrenbereich schleunigst verlassen werden muss. Gleichzeitig ist auch die Gefährdungslage auf den Nachbargleisen GL1 und GL2 durch Hervorhebung der Priorität 2 HP2 gekennzeichnet. Sollte die Gefährdungslage noch weiter steigen, kann ein Warnhinweis WH beispielsweise durch eine blinkende Anzeige erzeugt werden.

### Bezugszeichenliste

- GLA: Gleisanlage
- GL1 ... GL3: Gleis
- GA1 ... GA2: Gleisabschnitt
- FZ: Schienenfahrzeug
- WA: Warnanlage
- SG: Schallgeber
- SL: Signalleuchte
- WH: Warnhinweis
- SAT: GPS-Satellit
- LZ: Leitzentrale
- ATS: Automatische Betriebsführung
- ATP: Automatisches Zugsicherungssystem
- IXL: Stellwerk
- ARS: Steuereinheit
- AT1 ... AT3: Antenne
- S1 ... S: Schnittstellen
- SE: Speichereinheit

- GA: Gleisarbeiter
- WV: Warnvorrichtung
- HUD: Head-up-Display
- CRL: Controller

- MFZ: Messfahrzeug
- CM: Kamera
- ARP: Augmented Reality Provider
- CLD: Cloud
- DSA: Digitaler Streckenatlas

- H3D: Hervorhebung eines Volumens
- H2D: Hervorhebung eines Bodenbereiches
- HP1: Hervorhebung Prio 1
- HP2: Hervorhebung Prio 2
- LS: Leitsignal

- CPT R: Erfassungsschritt für Realität
- CALC VR: Berechnungsschritt für VR
- ACT WV: Aktivierungsschritt der Warnvorrichtung
- LOC WV: Lokalisierungsschritt für Warnvorrichtung
- LOC OUT: Ausgabe der Position
- VR IN: Eingabe der VR-Daten
- DIR: Erfassungsschritt für Blickrichtung
- POS FZ: Position eines Fahrzeugs
- POS In: Eingabeschritt der Position
- POS OUT: Ausgabeschritt der Position
- RISC: Bewertungsschritt der Gefährdungslage
- DANG: Abfrageschritt einer Gefährdung
- FIN: Abfrageschritt für die Beendung Gleisarbeiten

- CALC AR: Berechnungsschritt für AR
- AR OUT: Ausgabeschritt für AR
- CH POS: Abfrageschritt Positionswechsel der Warnvorrichtung
- GEN WH: Erzeugungsschritt Wahrhinweis
- WH OUT: Ausgabeschritt Warnhinweis

## Patentansprüche

1. Verfahren zum Überwachen von Gleisarbeiten, bei dem
• eine Gleisanlage (GLA), an der die Gleisarbeiten durchgeführt werden, auf durch den Zugverkehr bedingte Gefährdungen hin überwacht wird,
• sobald eine bevorstehende Gefährdung festgestellt wird, rechnergestützt ein Warnsignal an eine Warnvorrichtung (WV) weitergegeben wird, die dazu eingerichtet ist, dass ein Gleisarbeiter (GA) diese mit sich führt,
**dadurch gekennzeichnet,**
**dass**
• die Warnvorrichtung (WV) mit einem Head-up-Display (HUD) ausgeführt ist,
• das Warnsignal aus einer von dem Head-up-Display (HUD) ausgegebenen Markierung im Sichtfeld des Gleisarbeiters (GA) besteht, wobei die Markierung denjenigen Bereich der Gleisanlage (GLA) kennzeichnet, für den die bevorstehende Gefährdung festgestellt worden ist.

2. Verfahren nach Anspruch 1,
**dadurch gekennzeichnet,**
**dass** die bevorstehende Gefährdung aus einer Belegungsinformation eines Gleisabschnitts (GA2) der Gleisanlage (GLA), an dem die Gleisarbeiten durchgeführt werden und/oder eines dem letztgenannten Gleisabschnitt benachbarten Gleisabschnitts (GA1) abgeleitet werden.

3. Verfahren nach einem der voranstehenden Ansprüche,
**dadurch gekennzeichnet,**
**dass** die bevorstehende Gefährdung auf Grund einer Ermittlung der tatsächlichen Position von Schienenfahrzeugen (FZ), die sich den Gleisarbeiten nähren, festgestellt wird.

4. Verfahren nach einem der voranstehenden Ansprüche,
**dadurch gekennzeichnet,**
**dass** die Markierung aus einer farblich bedingten und/oder helligkeitsbedingten Hervorhebung (HP1, HP2) besteht, die den Bereich der Gleisanlage (GLA) überlagert, für den die bevorstehende Gefährdung festgestellt worden ist.

5. Verfahren nach Anspruch 4,
**dadurch gekennzeichnet,**
**dass** die Hervorhebung (H2D) einen Bodenbereich der Gleisanlage (GLA) kennzeichnet.

6. Verfahren nach einem der Ansprüche 4 oder 5,
**dadurch gekennzeichnet,**
**dass** die Hervorhebung (H3D) ein Volumen innerhalb der Gleisanlage (GLA) kennzeichnet.

7. Verfahren nach einem der Ansprüche 4 bis 6,
**dadurch gekennzeichnet,**
**dass** die Hervorhebungen (HP1, HP2) abgestuft in Abhängigkeit von einer Gefährdungshöhe darstellbar ist.

8. Verfahren nach einem der voranstehenden Ansprüche,
**dadurch gekennzeichnet,**
**dass** das Warnsignal zusätzlich einen Warnhinweis (WH) beinhaltet, der insbesondere in das Head-up-Display (HUD) eingeblendet wird.

9. Verfahren nach Anspruch 8,
**dadurch gekennzeichnet,**
**dass** der Warnhinweis (WH) ausgegeben wird, wenn eine Reaktion des Gleisarbeiters (GA) auf das ursprüngliche Warnsignal ohne Warnhinweis (WH) nicht registriert werden kann.

10. Verfahren nach einem der voranstehenden Ansprüche,
**dadurch gekennzeichnet,**
**dass** über das Head-up-Display (HUD) ein Leitsignal (LS) ausgegeben wird, das aus einer weiteren Markierung für einen gefahrlosen Arbeitsbereich für den Gleisarbeiter (GA) besteht.

11. Verfahren nach einem der voranstehenden Ansprüche,
**dadurch gekennzeichnet,**
**dass** für einen Datenaustausch mit dem Head-up-Display (HUD) eine Steuereinheit (ARS) verwendet wird, die über eine insbesondere kabellose Schnittstelle mit dem Head-up-Display (HUD) kommuniziert.

12. Verfahren nach einem der voranstehenden Ansprüche,
**dadurch gekennzeichnet,**
**dass** das Head-up-Display (HUD) für einen Datenaustausch mit Geräten in einer Cloud (CLD) kommuniziert.

13. Warnvorrichtung (WV) für Gleisarbeiten, die an einer Gleisanlage durchgeführt werden, wobei die Warnvorrichtung dazu eingerichtet ist, dass ein Gleisarbeiter (GA) diese mit sich führt, **dadurch gekennzeichnet,**
**dass**
• die Warnvorrichtung (WV) als Head-up-Display (HUD) ausgeführt ist,
• die Warnvorrichtung (WV) eingerichtet ist, ein Warnsignal, bestehend aus einer Markierung im Sichtfeld des Gleisarbeiters (GA) zu erzeugen, wobei die Markierung einen Bereich der Gleisanlage (GLA) kennzeichnet, für den die bevorstehende Gefährdung festgestellt worden ist.

14. Computerprogrammprodukt mit Programmbefehlen zur Durchführung des Verfahrens nach einem der Ansprüche 1 - 13.

15. Bereitstellungsvorrichtung für das Computerprogrammprodukt nach Anspruch 14, wobei die Bereitstellungsvorrichtung dazu ausgebildet ist, das Computerprogrammprodukt zu speichern und/oder bereitzustellen.

## Claims

1. Method for monitoring track work, with which
• a track system (GLA), on which the track work is performed, is monitoring for hazards caused by the train service,
• as soon as an imminent hazard is established, a warning signal is forwarded to a warning apparatus (WV) in a computer-assisted manner, said warning apparatus being configured such that a track worker (GA) carries it with him,
**characterised in that**
• the warning apparatus (WV) is designed with a head-up display (HUD),
• the warning signal consists of a marker output by the head-up display (HUD) in the field of view of the track worker (GA), wherein the marker identifies that region of the track system (GLA) for which the imminent hazard has been established.

2. Method according to claim 1,
**characterised in that**
the imminent hazard are derived from an item of occupancy information of a track section (GA2) of the track system (GLA), on which the track work is performed, and/or of a track section (GA1) adjacent to the last-mentioned track section.

3. Method according to one of the preceding claims,
**characterised in that**
the imminent hazard is established on the basis of a determination of the actual position of rail vehicles (FZ) which are approaching the track work.

4. Method according to one of the preceding claims,
**characterised in that**
the marker consists of a display (HP1, HP2) which is conditioned by colour and/or brightness and which overlays the region of the track system (GLA) for which the imminent hazard has been established.

5. Method according to claim 4,
**characterised in that**
the display (H2D) identifies a base region of the track system (GLA).

6. Method according to one of claims 4 or 5,
**characterised in that**
the display (H3D) identifies a volume within the track system (GLA).

7. Method according to one of claims 4 to 6,
**characterised in that**
the displays (HP1, HP2) can be displayed gradually as a function of a level of hazard.

8. Method according to one of the preceding claims,
**characterised in that**
the warning signal additionally contains a warning notification (WH) which in particular is faded into the head-up display (HUD).

9. Method according to claim 8,
**characterised in that**
the warning notification (WH) is output if a response by the track worker (GA) to the original warning signal without a warning notification (WH) cannot be registered.

10. Method according to one of the preceding claims,
**characterised in that**
a control signal (LS) which consists of a further marker for a hazard-free work area for the track worker (GA) is output via the head-up display (HUD).

11. Method according to one of the preceding claims,
**characterised in that**
for a data exchange with the head-up display (HUD) a control unit (ARS) which communicates with the head-up display (HUD) via an in particular wireless interface is used.

12. Method according to one of the preceding claims,
**characterised in that**
for a data exchange the head-up display (HUD) communicates with devices in a cloud (CLD).

13. Warning apparatus (WV) for track work, which is performed on a track system, wherein the warning apparatus is configured such that a track worker (GA) carries this with him,
**characterised in that**
• the warning apparatus (WV) is designed as a head-up display (HUD),
• the warning apparatus (WV) is designed to generate a warning signal consisting of a marker in the field of view of the track worker (GA), wherein the marker identifies a region of the track system (GLA) for which the imminent hazard has been established.

14. Computer program product with program commands for performing the method according to one of claims 1 -13.

15. Provisioning apparatus for the computer program product according to claim 14, wherein the provisioning apparatus is designed to store and/or provide the computer program product.

## Revendications

1. Procédé de surveillance de travaux sur voie, dans lequel
• on surveille une installation (GLA) de voie, sur laquelle des travaux sur voie sont exécutés, en ce qui concerne des dangers dus au trafic ferroviaire,
• dès que l'on constate un danger imminent, on transmet de manière assistée par ordinateur un signal d'avertissement à un dispositif (WV) d'avertissement, qui est conçu pour qu'un travailleur (GA) sur voie l'ait avec soi,
**caractérisé en ce que**
• le dispositif (WV) d'avertissement est réalisé par un head-up-display (HUD),
• le signal d'avertissement consiste en un marquage émis par le head-up-display (HUD) dans le champ visuel du travailleur (GA) sur voie, le marquage indiquant la zone de l'installation (GLA) de voie pour laquelle on a constaté le danger imminent.

2. Procédé suivant la revendication 1,
**caractérisé en ce que**
l'on déduit le danger imminent d'une information d'occupation d'un tronçon (GA2) de voie de l'installation (GLA) de voie sur laquelle les travaux de voie sont effectués et/ou d'un tronçon (GA1) de voie voisin du tronçon de voie précité.

3. Procédé suivant l'une des revendications précédentes,
**caractérisé en ce que**
l'on constate le danger imminent sur la base d'une détermination de la position réelle de véhicules (FZ) ferroviaires qui s'approchent des travaux sur voie.

4. Procédé suivant l'une des revendications précédentes,
**caractérisé en ce que**
le marquage consiste dans une mise en évidence (HP1, HP2) due à de la couleur et/ou à de la luminosité, qui se superpose à la zone de l'installation (GLA) de voie pour laquelle on a constaté le danger imminent.

5. Procédé suivant la revendication 4,
**caractérisé en ce que**
la mise en évidence (H2D) indique une zone de sol de l'installation (GLA) de voie.

6. Procédé suivant l'une des revendications 4 ou 5,
**caractérisé en ce que**
la mise en évidence (H3D) indique un volume à l'intérieur de l'installation (GLA) de voie.

7. Procédé suivant l'une des revendications 4 à 6,
**caractérisé en ce que**
les mises en évidence (HP1, HP2) peuvent être présentées de manière étagée en fonction d'un niveau de danger.

8. Procédé suivant l'une des revendications précédentes,
**caractérisé en ce que**
le signal d'avertissement contient de plus une indication (WH) d'avertissement, qui apparaît notamment dans le head-up-display (HUD).

9. Procédé suivant la revendication 8,
**caractérisé en ce que**
l'on émet l'indication (WH) d'avertissement, si une réaction du travailleur (GA) sur voie au signal d'avertissement initial sans indication (WH) d'avertissement ne peut pas être enregistrée.

10. Procédé suivant l'une des revendications précédentes,
**caractérisé en ce que**
l'on émet par l'intermédiaire du head-up-display (HUD) un signal (LS) de guidage, qui consiste en un marquage supplémentaire pour une zone de travail sans danger pour le travailleur (GA) sur voie.

11. Procédé suivant l'une des revendications précédentes,
**caractérisé en ce que**
l'on utilise pour un échange de données avec le head-up-display (HUD) une unité (ARS) de commande, qui communique avec le head-up-display (HUD) par l'intermédiaire d'une interface, en particulier sans fil.

12. Procédé suivant l'une des revendications précédentes,
**caractérisé en ce que**
le head-up-display (HUD) communique pour un échange de données avec des appareils dans un cloud (CLD).

13. Dispositif (WV) d'avertissement pour des travaux sur voie qui sont effectués sur une installation de voie, le dispositif d'avertissement étant conçu pour qu'un travailleur (GA) sur voie le prenne avec soi,
**caractérisé en ce que**
• le dispositif (WV) d'avertissement est réalisé en head-up-display (HUD),
• le dispositif (WV) d'avertissement est conçu pour produire un signal d'avertissement consistant en un marquage dans le champ visuel du travailleur (GA) sur voie, le marquage indiquant une zone de l'installation (GLA) de voie pour laquelle il a été constaté le danger imminent.

14. Produit de programme d'ordinateur, comportant des instructions de programme pour la réalisation du procédé suivant l'une des revendications 1 à 13.

15. Dispositif de mise à disposition pour le produit de programme d'ordinateur suivant la revendication 14, le dispositif de mise à disposition étant conçu pour mettre en mémoire et/ou mettre à disposition le produit de programme d'ordinateur.
